# NEUE EUROPÄISCHE PATENTSCHRIFT

(11) **EP 0 264 682 B2**
(45) Veröffentlichungstag und Bekanntmachung des Hinweises auf die Entscheidung über den Einspruch: **02.01.1997**
(45) Hinweis auf die Patenterteilung: 20.06.1990
(21) Anmeldenummer: 87114358.2
(22) Anmeldetag: 01.10.1987
(51) Int. Cl.: F16J 10/02, F15B 15/28

(54) **Kolben-Zylinder-Aggregat**
Piston-cylinder-aggregate
Agrégat à piston-cylindre

(30) Priorität: 22.10.1986 DE 3635893
(43) Veröffentlichungstag der Anmeldung: 27.04.1988
(73) Patentinhaber: Festo KG, D-73734 Esslingen (DE)
(72) Erfinder: Stoll, Kurt, Dipl.Ing, D-7300 Esslingen (DE)
(74) Vertreter: Abel, Martin, Dipl.-Ing.

(56) Entgegenhaltungen:
- DE-A- 2 917 232
- DE-U- 1 959 967
- DE-U- 8 315 785
- FR-A- 2 245 865
- GB-A- 2 106 984

## Beschreibung

Die Erfindung betrifft ein Kolben-Zylinder-Aggregat gemäß dem Oberbegriff von Anspruch 1.

Ein derartiges Kolben-Zylinder-Aggregat ist durch eine offenkundige Vorbenutzung der Firma Tünkers bekannt geworden. Dessen Zylinderraum und Kolben weisen die Querschnittsform eines Flachzylinders mit linearen Längsseiten und abgerundeten Scheitelbereichen auf. In Vertiefungen der Scheitelbereiche sind Dauermagnete angeordnet, die mit Schaltern zusammenwirken, die an neben dem Zylinderrohr verlaufenden Zugankern angebracht sind. Durch die besondere Querschnittsform wird eine Verdrehsicherung zwischen Kolben und Zylinder erreicht. Die Dauermagnete dienen zur Positionsermittlung des Kolbens, indem ihre Magnetfelder die Schalter berührungslos betätigen können.

Wirkt auf den Kolben im Betrieb ein hohes Drehmoment, unterliegt er einem erhöhten Verschleiß. Dadurch bedingte Winkellageänderungen des Kolbens beeinträchtigen die Abdichtqualität im Zylinderrohr und die Schaltgenauigkeit bei der Betätigung der Schalter. Hinzu kommt, daß das Zylinderrohr bei hoher Druckbeaufschlagung mit verhältnismäßig dicker Wandstärke ausgeführt werden muß, um insbesondere im Bereich seiner Längsseiten die Verformungsneigung zu reduzieren. Dadurch vergrößert sich aber der Abstand zwischen den Dauermagneten und den Schaltern, was wiederum zu Lasten der Schaltgenauigkeit geht, zumal auch noch die Anbringung der Schalter an den Zugankern toleranzbedingten Ungenauigkeiten unterliegt.

Die Erfindung hat sich zum Ziel gesetzt, ein Kolben-Zylinder-Aggregat gemäß der eingangs genannten Art zu schaffen, das bei hoher Innendruckbelastbarkeit und äußerster Schaltpräzision eine stabile, wenig verschleißanfällige Verdrehsicherung bietet und kompakte Außenabmessungen erlaubt.

Dieses Ziel wird mit den Maßnahmen und Merkmalen des kennzeichnenden Teils des Anspruchs 1 erreicht.

Auf diese Weise erfolgt eine Verdrehsicherung ausschließlich aufgrund der Ovalkontur von Kolben und Zylinderraum. Der Dauermagnet ist an der Verdrehsicherung nicht beteiligt, weshalb er keinerlei Belastungen ausgesetzt ist. Die Schaltgenauigkeit und Funktionssicherheit der Positionsanzeige für den Kolben bleibt deshalb über die gesamte Lebensdauer des Aggregats auf einem konstant hohen Niveau. Die Ovalkontur bewirkt einen kontinuierlichen Verlauf der Oberfläche des Zylinderraumes, so daß sich auch unter hohem Innendruck eine im wesentlichen gleichförmioe Spannungsverteilung ohne ausgeprägte Spannungsspitzen einstellt. Die damit mögliche hohe Belastbarkeit des Aggregats wird bei minimalem Abstand zwischen dem Dauermagneten und dem jeweils außen angeordneten Schalter erreicht. Die Folge ist ein äußerst exaktes Ansprechverhalten bei der Positionsabirage, weil das Magnetsignal sehr stark ist. All diese Vorteile werden ergänzt durch die Möglichkeit des Einhaltens äußerst kompakter Aussenabmessungen des Zylinders, insbesondere in Richtung der Nebenachse der Ovalkontur.

Bei dem Kolben-Zylinder-Aggregat nach der DE-U 8 315 785 ist am Kolben radial abstehend mindestens ein Dauermagnet angeordnet, der in einer Längsnut am Umfang des Zylinderraumes geführt ist. Auf diese Weise wird eine Verdrehsicherung zwischen Kolben und 1 Zylinder erreicht. Außerdem dient der Dauermagnet zur Positionsermittlung des Kolbens, indem sein Magnetfeld außen am Zylinder angeordnete Schalter berührungslos betätigen kann.

Weil auf dem Kolben z.B. über eine Kolbenstange ausgeübtes Drehmoment ausschließlich vom Dauermagneten aufgenommen wird, besteht für diesen beträchtliche Beschädigungsgefahr, zumal Magnetmaterial in der Regel relativ spröde ist und zum Brechen neigt. Deshalb kann das bekannte Aggregat praktisch nur bei geringen Beanspruchungen eingesetzt. werden. Daneben wirft die zerklüftete Zylinderraumkontur erhebliche Abdichtungrprobleme auf. Es sind Spezialdichtungen zwischen Kolben und Zylinder erforderlich, die hohem Verschleiß ausgesetzt sind. Die Diskontinuitäten in der Kontur des Zylinderraumes verursachen ferner extreme Kerbwirkungen, was einen Betrieb unter hohem Innendruck nicht erlaubt oder vergrößerte Zylinderwandstärken erfordert. Letzteres geht zu Lasten der Schaltgenauigkeit des Dauermagneten, weil seine Entfernung zum außen angeordneten Schalter vergrößert wird. Nicht zuletzt ist auf die wenig platzsparende Bauweise des bekannten Aggregats zu verweisen.

Zwar ist bereits in der FR-A 2 245 865 auf die Möglichkeit einer ellipsenförmigen Ausgestaltung eines Kolbens hingewiesen. Dort steht jedoch die Verringerung der Außenabmessungen im Vordergrund, während eine Verdrehsicherung nicht beabsichtigt ist. Auch ist keinerlei Einrichtung zur Ermittlung der Kolbenposition vorgesehen.

Bei dem in der DE-A 2 917 232 beschriebenen Kolben-Zylinder-Aggregat erfolgt eine Positionsermittlung des Kolbens durch einen in den Kolbenumfang eingelassenen Magnetring. Diese Ringform macht eine Verdrehsicherung unnötig. Die Konturen sowohl des Zylinderraumes als auch des Kolbens sind kreisförmig.

Die GB-A 2 106 984 verweist lediglich allgemein auf die Möglichkeit einer Stellungsabfrage von bewegten Teilen mittels einzelner Dauermagnete. Hinweise hinsichtlich einer günstigen Anordnung der Magnete bei verdrehgesicherten Kolben werden jedoch nicht gegeben.

Vorteilhafte Weiterbildungen der Erfindung sind in den Unteransprüchen aufgeführt.

Bei der Weiterbildung nach Anspruch 2 können mehrere außen am Zylinder angeordnete Schalter in Abhängigkeit von verschiedenen Kalbenstellungen betätigt werden. Dadurch wird der Einsatzbereich des Aggregates beträchtlich erweitert. Die Weiterbildung nach Anspruch 3 ermöglicht eine einfache Montage des Dauermagneten und gewährleistet sicheren Halt. Mit der Ausführungsform gemäß Anspruch 5 läßt sich eine besonders hohe Schaltpräzision erreichen.

Die Weiterbildung nach Anspruch 6 erlaubt eine kostengünstige Herstellung von Kolben und/oder Zylinder.

Bei der Weiterbildung nach Anspruch 7, ist von Vorteil, daß auf eine Feinbearbeitung der Außenumfangsfläche des Kolbens verzichtet werden kann, was den Fertigungsaufwand reduziert. Die Führungsaufgaben übernimmt hier das nachträglich angebrachte Führungsband. In diesem Zusammenhang ist vor allem die Weiterbildung nach Anspruch 8 von Vorteil, die auch in diesem Falle eine sichere Abdichtung der vom Kolben im Zylinderraum abgeteilten Arbeitsräume gewährleistet. Mit der Ausführungsform gemäß Anspruch 9 erreicht man bei exakter Führung eine gute Abdichtung zwischen Kolben und Zylinder. Die Weiterbildungen gemäß den Ansprüchen 10-13 beschreiben vorteilhafte Ausführungsformen, um Schalter in bezug auf am Ovalkolben angeordnete Dauermagnete bestmöglich zu haltern.

Die Erfindung wird nachfolgend anhand der beiliegenden Zeichnung näher erläutert. Darin zeigen:
Fig. 1 eine erste Bauform des erfindungsgemäßen Kolben-Zylinder-Aggregates in Seitenansicht bei aufgebrochenem Zylinder und der Übersichtlichkeit halber lediglich gestrichelt angedeuteten Kolbendichtungen,
Fig. 2 einen Schnitt durch das Kolben-Zylinder-Aggregat aus Fig. 1 gemäß Schnittlinie II-II,
Fig. 3 eine Draufsicht auf den Kolben aus Fig. 2 in Richtung zum Dauermagnetstück,
Fig. 4 eine weitere Ausführungsform des Kolben-Zylinder-Aggregates in einer Schnittdarstellung analog zu derjenigen in Fig. 2,
Fig. 5 einen vergrößerten Ausschnitt des Kolben-Zylinder-Aggregates aus Fig. 4 in Schnittdarstellung gemäß Schnittlinie V-V,
Fig. 6 einen Ausschnitt eines weiteren Ausführungsbeispiels des Kolben-Zylinder-Aggregates im Querschnitt und
Fig. 7 eine weitere Ausführungsform des Kolben-Zylinder-Aggregates gemäß der Erfindung in einer Schnittdarstellung analog zu derjenigen nach Fig. 2.

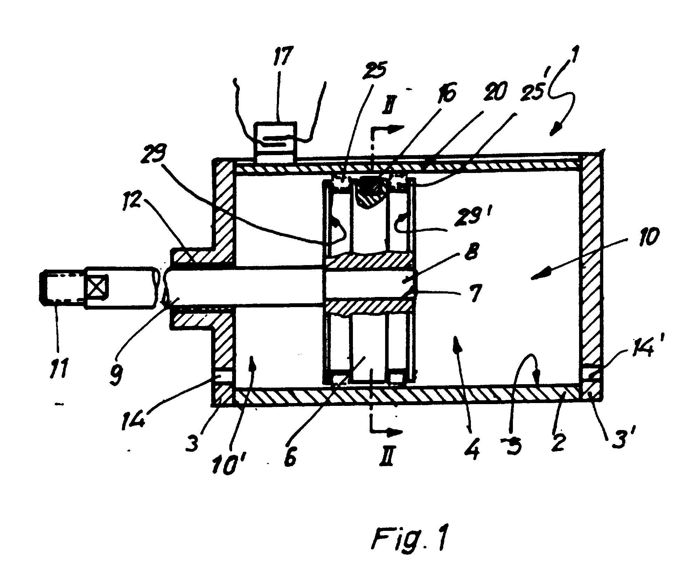

Die abgebildeten Kolben-Zylinder-Aggregate enthalten einen Zylinder 1, der im wesentlichen ein Zylinderrohr 2 mit axialseitig angeordneten Zylinderdeckeln 3, 3' aufweist. Im Zylinder 1 befindet sich ein Zylinderraum 4, der axialseitig von den Zylinderdeckeln 3, 3' und umfangsseitig von einer zylindrischen Führungsfläche 5 begrenzt ist. Letztere dient zur Führung eines im Zylinderraum angeordneten, in axialer Richtung verschiebbaren Kolbens 6. Dieser besitzt an zentraler Stelle eine axiale Durchgangsöffnung 7, in die der stirnseitige Befestigungsabschnitt 8 einer koaxial zum Kolben 6 und zum Zylinder 1 angeordneten Kolbenstange 9 eingesteckt ist. Der Befestigungsabschnitt 8 sitzt dabei vorzugsweise im Preßsitz in der Durchgangsöffnung 7 ein oder ist, wie beim Ausführungsbeispiel nach Fig. 1, eingeklebt. Die Kolbenstange 9 durchquert einen der beiden vom Kolben 6 im Zylinderraum 4 voneinander abgeteilten Arbeitsräume 10, 10' und durchdringt den zugeordneten Zylinderdeckel 3 zur Außenseite hin, wo sie einen weiteren Befestigungsabschnitt 11 zum Anbringen eines zu betätigenden Bauteils aufweist. Der Durchdringungsbereich des Zylinderdeckels 3 ist mit einer Führungs- und Abdichtanordnung 12 für die Kolbenstange 9 ausgestattet.

In beide Arbeitsräume 10, 10' führt je eine Anschlußöffnung 14, 14', über die ein Füllen der Räume mit Druckmittel, z. B. Druckluft, oder ein Belüften derselben erfolgen kann, um auf diese Weise den Kolben in die eine oder andere Richtung zu verschieben.

Mit dem erfindungsgemäßen Kolben-Zylinder-Aggregat ist es möglich, in Abhängigkeit von einer oder mehreren Kolben-Verschiebestellungen im Zylinderraum einen oder mehrere extern angeordnete Schalter zu betätigen, die dann weitere, in der Zeichnung nicht abgebildete Funktionsteile ansteuern können, z.B. eine Anzeigeeinheit, die die Kolbenstellung verdeutlicht, Ventile, die die weitere Kolbenbewegung beeinflussen, oder aber weitere Maschinen oder Bauteile einer Fertigungseinheit. Um dies zu verwirklichen, ist an einer Stelle im Bereich des Außenumfanges des Kolbens 6 und hierbei im Bereich seiner der Führungsfläche zugewandten Umfangsfläche 15 ein Dauermagnetstück 16 fest angeordnet.

Dieses wird bei der Verschiebebewegung des Kolbens 6 in Axialrichtung mitbewegt. Darüber hinaus befindet sich im Bereich des Außenumfangs des Zylinderrohres 2 ein an diesem angeordneter Schalter 17, bei den Ausführungsbeispielen ein Reed-Schalter, der durch das Magnetfeld des bei der Kolbenbewegung in seinen Bereich gelangenden Dauermagnetstückes 16 berührungslos betätigbar ist. Der Schalter 17 wird also dann geschaltet, wenn sich das Dauermagnetstück 16 so weit angenähert hat, daß die Stärke seines Magnetfeldes ausreicht, um die beiden Kontakte des Schalters zu schließen. Zur Gewährleistung eines präzisen Schaltvorganges ist dabei von Vorteil, den Schalter 17 so nahe wie möglich im Bereich der linearen Verschiebebahn des Dauermagnetstückes 16 anzuordnen; bei der in den Ausführungsbeispielen verwirklichten Anord-nungsweise liegen daher das jeweilige Dauermagnetstück 16 und der Schalter 17 auf einem gemeinsamen gedachten Radialstrahl 18.

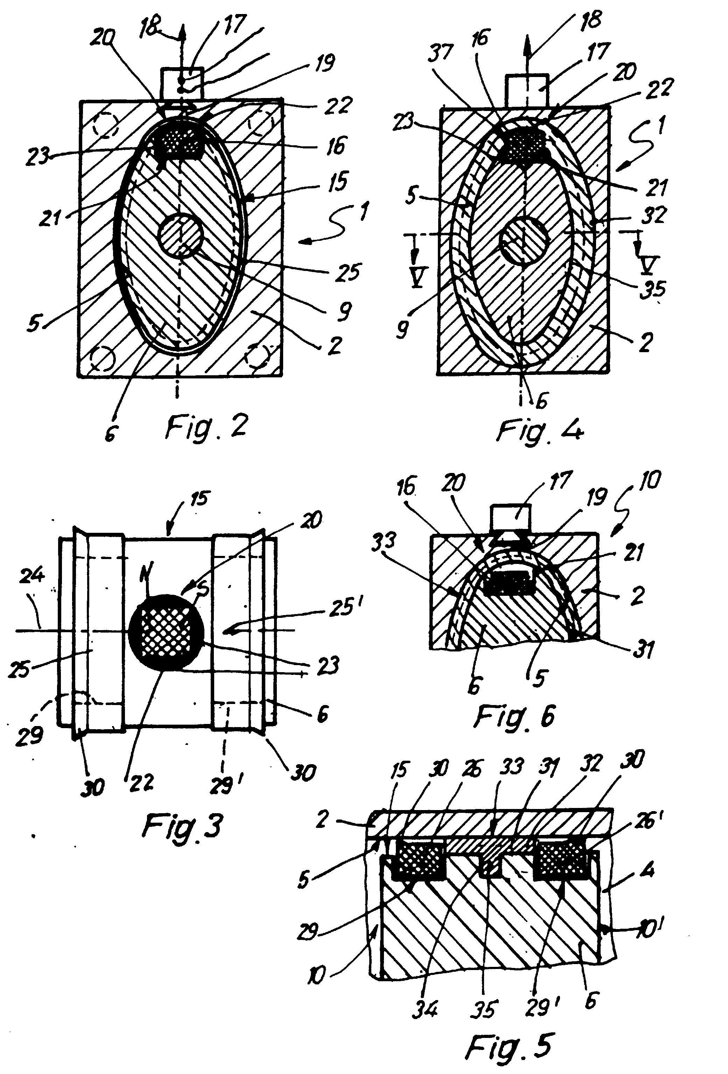

Um zu verhindern, daß sich der Schaltzeitpunkt verstellt, was beispielsweise dadurch geschehen können, daß sich der Kolben 6 im Betrieb verdreht und sich dadurch die Lage der Magnet-Verschiebebahn ändert, ist der Kolben bei sämtlichen Ausführungsbeispielen gegen Verdrehen gesichert. Die entsprechende Einrichtung zur Verdrehsicherung wird dabei vom Kolben 6 und vom Zylinder 1 selbst gebildet, indem zum einen der Kolben 6 keinen kreisförmigen, sondern einen von der Kreisform abweichenden Querschnitt bzw. Außenumfang aufweist. Entsprechendes gilt für den Zylinderraum 4, dessen Führungsfläche 5 im Querschnitt gemäß Fig. 2, 4 und 6 gesehen hinsichtlich ihrer Kontur derjenigen des Kolbenumfanges, abgesehen von gewissem Gleitspiel, angepaßt ist.

Bei den abgebildeten Ausführungsbeispielen haben Jeweils sowohl der Kolben 6 als auch der Zylinderraum 4 eine ovale Querschnittsgestalt bzw. ist sowohl die Außenumfangskontur des Kolbens 6 als auch des Zylinderraumes 4 in Axialrichtung gesehen elliptisch. Man kann sich also den Zylinderraum 4 als einen mathematischen Zylinder vorstellen, der elliptische Grundflächen hat und dessen Mantelfläche von der Führungsfläche 5 gebildet ist. Ähnliches gilt für den Kolben 6, der im wesentlichen ebenfalls die Grundgestalt eines mathematischen Zylinders mit elliptischen Grundflächen besitzt, wobei die Mantelfläche von der der Führungsfläche 5 gegenüberliegenden Außenumfangsfläche des Kolbens gebildet ist.

Der besondere Vorteil dieser Konstruktion liegt darin, daß sowohl der Kolben 6 als auch das Zylinderrohr 2 als Ziehteile bzw. Ziehprofilteile hergestellt werden können, die hernach eines nur geringen Bearbeitungsaufwandes bedürfen. Als Materialien bieten sich insbesondere nichtmagnetische bzw. nichtmagnetisierbare Leichtmetall-Legierungen, z. B. Aluminium-Legierungen, an. Die Herstellungskosten sind dadurch praktisch nicht höher als diejenigen von Kolben-Zylinder-Aggregaten herkömmlicher Bauart.

Die Oval-Bauweise hat den weiteren Vorteil, daß sich insgesamt kompakte Außenabmaße ergeben. Die Außenkontur des Zylinders 1 bzw. des Zylinderrohres 2 ist im Querschnitt gesehen rechteckförmig, wobei die beiden Längsachsen des Rechteckes zum einen mit der Hauptachse und zum anderen mit der Nebenachse der Ellipse zusammenfallen. In Richtung der Nebenachsen ergibt sich so eine schmale, platzsparende Bauweise.

In Verbindung damit ist es zweckmäßig, wie dies auch bei den Ausführungsbeispielen der Fall ist, das Dauermagnetstück, das sich in Kolben-Umfangsrichtung nur über einen Bruchteil des Kolbenumfanges erstreckt, in einem Scheitelbereich 20 des der Führungsiläche 5 zugewandten Außenumfanges 15 des Kolbens 6 anzuordnen. Die Verschiebebahn des Dauermagnetstücks 16 befindet sich damit in einem Bereich 19 geringster Zylinderwandstärke, was es ermöglicht, infolge des nur geringen Abstandes zum Schalter 17, bereits mit kleinen, geringe Magnetteldstärke aufweisenden Dauermagneten 16, eine hohe Schaltgenauigkeit zu erreichen.

Bei den Ausführungsbeispielen befinden sicn die Dauermagnetstücke 16 im Bereich eines Hauptscheitels des elliptischen Kolbens 6 und sind hierbei in eine Radialvertiefung 21 am der Führungsfläche 5 zugewandten Außenumfang 15 des Kolbens derart eingebettet, daß sie den Kolben nicht radial überragen. Bei den Ausführungsbeispielen gemäß den Fig. 1 bis 4 ist die Kontur der zur Führungsfläche 5 weisenden Magnetseite 22 derjenigen der Zylinder-Oberfläche angepaßt und in Umfangsnichtung leicht gewölbt, wobei sie nahezu bündig zur Kolbenfläche verläuft. Demgegenüber ist das Dauermagnetstück bei der Ausführungsform nach Fig. 6 im wesentlichen quader- oder würfelförmig ausgebildet und hinsichtlich seines Volumens so stark reduziert, daß es tiefer im Innern der Vertiefung 21 sitzt. Als Befestigungsmöglichkeit bietet sich in diesem Falle ein Einkleben an; bei 23 ist geschwärzt der entsprechende Klebstoff angedeutet. In Axialrichtung gesehen befindet sich das Dauermagnetstück 16 jeweils vorzugsweise im Bereich der Kolbenlängsmitte.

Bestmögliche Resultate hinsichtlich der Schaltgenauigkeit werden erzielt, wenn die beiden Magnetpole in Axialrichtung 24 ausgerichtet werden, wie dies in Fig. 3 angedeutet ist. Als Dauermagnetstück bietet sich jeweils insbesondere ein Stabmagnet an.

Es versteht sich, daß auch mehrere Dauermagnetstücke über den Kolbenumfang verteilt und insbesondere im Bereich mehrerer Ellipsenscheitel angeordnet sein können, wobei entsprechend mehrere externe Schalter 17 vorgesehen werden. Dies erweitert die Variationsmöglichkeiten hinsichtlich der Betätigung weiterer, mit den Schaltern in Verbindung stehender Funktionseinheiten.

Die Kolben 6 weisen im Bereich ihres Außenumfanges 15 jeweils zwei koaxial angeordnete Dichtungsringe 25, 25' bzw. 26, 26' auf (beim Ausführungsbeispiel nach Fig. 6 nicht abgebildet). In Fig. 1 sind die Dichtungsringe 25, 25' der Übersichtlichkeit halber lediglich gestrichelt dargestellt, so daß man die Art ihrer Befestigung besser erkennt (vgl. auch Fig. 5). Wie ersichtlich, sind in die der Führungsfläche 5 zugewandte Kolbenumfangsfläche 15 zwei in axialem Abstand zueinander angeordnete umlaufende, in sich geschlossene Halterungsvertiefungen 29,29' eingelassen, in denen jeweils ein Dichtring einsitzt und zweckmäßigerweise aus Material mit gummi-elastischen Eigenschaften besteht und austauschbar eingeknüpft ist.

Beim Ausführungsbeispiel gemäß Fig. 1 bis 3 arbeitet die Kolbenumfangsfläche 15 mit der Führungsfläche 5 zur Kolbenführung unmittelbar zusammen, und die Dichtringe überragen die Umfangsfläche 15 mit einer ringförmigen Dichtungspartie 30 bzw. Dichtlippe in Radialrichtung nur geringfügig. Im eingebauten Zustand werden die Dichtungspartien 30 in Radialrichtung nach innen gequetscht, so daß praktisch die Fläche 15 auf der Führungsfläche 5 gleitet. Hier sind also gewisse Feinbearbeitungsvorgänge der Außenumfangsfläche 15 erforderlich.

Im Unterschied dazu hat die Kolbenumfangsfläche 15 beim Ausführungsbeispiel gemäß Fig. 4 und 5 keine Führungsaufgaben zu erledigen. Hier ist der Kolben 6 von mindestens einem ringförmigen, koaxial angeordneten Kolbenführungsband 31 im Bereich der Umfangsfläche 15 umgeben, das am Kolben 6 mit diesem mitbewegbar beiestigt ist und sich über einen Abschnitt der Kolbenlänge erstreckt. Es befindet sich zwischen den beiden Dichtungsringen 26, 26', die, wie auch die Dichtungsringe 25, 25' im Ausführungsbeispiel gemäß den Fig. 1 und 3, zu beiden axialen Seiten des Dauermagnetstückes 16 angeordnet sind. Das Band 31 hat einen hülsenförmigen Führungsabschnitt 32, der mit seiner Innenseite am Kolben 6 anliegt und dessen radial nach außen weisende Bandführungsfläche 33 an der Führungsfläche 5 des Zylinders 2 mit Gleitspiel anliegt. An der radialen Innenseite des Führungabschnittes 32 ist ein umlaufender Kragen 35 angeformt, so daß das Band 31 im Querschnitt in etwa T-förmige Gestalt aufweist, welcher Kragen in einer komplementären, um den Kolben umlaufenden ringförmigen Befestigungsvertiefung 34 gehaltert ist.

Damit erfolgt die Führung des Kolbens 6 im Zylinder über die Bandführungsfläche 33 des Kolbenführungsbandes 31, so daß auf eine Feinbearbeitung der Kolben-Außenfläche, beispielsweise Hcnen od. dgl., zugunsten einer wesentlich kürzeren Herstellungszeit verzichtet werden kann.

Das Kolbenführungsband 31 besteht im Bereich seiner Bandführungsfläche 33 vorzugsweise aus verschleißarmem Material und kann im übrigen aus Kunststoffmaterial bestehen, so daß zum einen eine einfache Montage des Bandes 31 möglich ist und zum andern aufgrund der Nachgiebigkeit des Bandes 31 Verkantungen und damit Beschädigungen des Zylinders ausgeschlossen sind.

Bei diesem Ausführungsbeispiel ragt die Dichtungspartie 30 der Dichtungsringe 26, 26' in Radialrichtung ein größeres Maß aus den Halterungsvertiefungen 29,29' heraus, um die Differenz der Querschnittsflächen des Zylinderraumes 4 und des Kolbens 6 auszugleichen und um auch hier die beiden Arbeitsräume 10, 10', wie auch in den anderen Ausführungsbeispielen, sicher einander gegenüber abzudichten.

Das Kolbenführungsband 31 befindet sich in der gleichen Quermittelebene des Kolbens 6 wie das Dauermagnetstück 16, welches vom Band 31 zur Führungsfläche 5 hin abgedeckt ist, ohne daß dabei seine Magnetkraft einer Schwächung unterliegt. An der Stelle des Magnetes ist daher das Führungsband 31 und insbesondere dessen Kragen 35 mit einer entsprechenden Ausnehmung 37 versehen.

Auch beim Ausführungsbeispiel nach Fig. 6 findet ein Kolbenführungsband 31 der erläuterten Art Verwendung, allerdings ist dies hier mit kontinuierlicher Querschnittsform versehen. Eine Aussparung ist hier nicht erforderlich, da das Magnetstück 16 kleiner und versenkt in der Vertiefung 21 angeordnet ist.

Hinsichtlich der Fertigung des Zylinderrohres ist noch nachzutragen, daß in dieses u. U. sogar schon bei der Fertigung durch Ziehen Löcher eingebracht werden können, die an der Zylinderstirnseite zur Aufnahme von Schrauben zur Befestigung der Zylinderdeckel dienen. Hier können dann Schrauben verwendet werden, die beim Einschrauben in die genannten Löcher ihr Gewinde selbst schneiden, so daß nochmals Herstellungszeit und Fertigungskosten eingespart werden können.

Es ist noch nachzutragen, daß die Schalter 17 zweckmäßigerweise in Axialrichtung verschiebbar am Zylinderrohr angeordnet sind, z. B. wie abgebildet mittels einer Führungseinrichtung mit Schwalbenschwanzführung. Dadurch kann der Schaltzeitpunkt beliebig variiert werden.

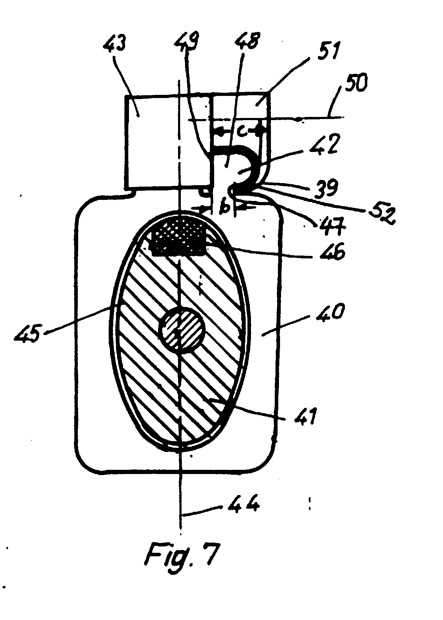

In Fig. 7 ist eine weitere Variante des Erfindungsgegenstandes gezeigt, bei der der Zylinder 40, in dem der ellipsenförmige Kolben 41 verschieblich geführt ist, an seinem Außenumfang eine sich in seiner Längsrichtung und in achsparalleler Anordnung zu ihm erstreckende Befestigungsschiene 42 oder Befestigungsleiste trägt, deren Länge praktisch der gesamten Hublänge des Zylinders entspricht und die zum Haltern des Schalters 43, der z. B. als Reed-Schalter ausgebildet sein kann, vorgesehen ist. Diese Befestigungsschiene oder -leiste ist am Zylinder durch Ziehen angeformt, sie ist einstückig mit dem Zylinder ausgebildet. Hierbei liegt die Befestigungsschiene oder -leiste 42 außerhalb der die Hauptachse 44 der Ellipse des Querschnitts des Kolbens 45 enthaltenden Längsmittelebene, wobei sie gegenüber dieser Hauptachse seitlich so weit versetzt ist, daß in der entsprechenden Endstellung des Kolbens es kann z. B. jeder Endstellung ein Schalter zugeordnet sein - der Schalter 43 dem stab- oder stiftförmigen Magnet 46 genau gegenüberliegt, der Schalter 43 und der Magnet 46 befinden sich hierbei in der Längsmittelebene 44 des Zylinders 40, die auch die Hauptachse der Ellipse des Zylinder- und Kolbenquerschnitts enthält.

Die Befestigungsschiene oder -leiste 42 ist mit dem Zylinder 40 über einen dünnen Steg 47 verbunden, dessen Breite "b" kleiner als diejenige "C" des außenliegenden eigentlichen Halterungsteils 48 der Befestigungsschiene oder -leiste 42 ist, dieses Halterungsteil hat vorzugsweise die Gestalt einer Verdickung. Der Schalter 43 ist an der Befestigungsschiene oder -leiste 42 in Längsrichtung verschieblich verstellbar und feststellbar geführt, er liegt hierbei an der einen Längsseite 49 der Befestigungsschiene oder -leiste an und ist an dieser mit Hilfe eines mit ihm lösbar, z. B. durch Verschrauben (Schraube 50) verbundenen Gegenstücks 51 gehalten, das die Befestigungsschiene oder -leiste von der anderen Seite her mit einem vorzugsweise klauenartig gebogenen Ansatz 52 umgreift, der zweckmäßigerweise unter die Verdickung greift.

Durch Längsverschiebung des Schalters 43 entlang der Befestigungsschiene oder -leiste können die für die Funktion des Zylinders wichtigen Punkte cder Stellen, z. B. Umkehrpunkt, beliebig, je nach Notwendigkeit, verstellt werden. Es können jedoch auch mehrere Schalter an den geeigneten Stellen der Schiene vorgesehen werden.

## Patentansprüche

1. Kolben-Zylinder-Aggregat, dessen Zylinder (1) innen einen sich in axialer Richtung erstreckenden Zylinderraum (4) mit von der Kreisform abweichendem Querschnitt aufweist, in dem sich ein in axialer Richtung verschiebbarer und hierbei von der umfangsseitigen Führungsfläche (5) des Zylinderraumes (4) geführter verdrehgesicherter Kolben (6) befindet, der ebenfalls einen von der Kreisform abweichenden, an den Querschnitt des Zylinderraumes (4) angepaßten Querschnitt bzw. Außenumfang (15) aufweist, wobei der Kolben (6) in mindesten einem Scheitelbereich seines der Führungsfläche (5) zugewandten Außenumfanges eine Vertiefung (21) aufweist, in der ein bei der Verschiebebewegung des Kolbens (6) mitbewegter, sich lediglich entlang eines Abschnittes des Kolbenumfanges (15) erstreckender Dauermagnet (16) fest angeordnet ist, im Bereich dessen linearer Verschiebebahn außen am Zylinder (1) mindestens ein durch das Magnetfeld des bei der Kolbenbewegung in seinen Bereich gelangenden Dauermagneten (16) berührungslos betätigbarer, z.B. als Reed-Schalter ausgebildeter Schalter (17) verschiebbar an einer Führungseinrichtung angeordnet ist, dadurch gekennzeichnet, daß sowohl der Zylinderraum (4) als auch der Kolben (6) zur Verdrehsicherung einen ovalen, insbesondere elliptischen Querschnitt aufweisen und der Zylinder zumindest im Bereich des Zylinderraumes (4) im Querschnitt gesehen eine rechteckförmige Außenkontur aufweist, wobei die beiden Längsachsen des Rechteckes zum einen mit Bezug zur Hauptachse und zum anderen mit Bezug zur Nebenachse des Kolbenovals parallel ausgerichtet sind, daß die Vertiefung (21) für den Dauermagneten (16) im Bereich eines Hauptscheitels des Ovals oder der Ellipse angeordnet ist und einem Bereich des Zylinders mit gegenüber anderen Wandbereichen verringerter Wandstärke gegenüberliegt, und daß der Schalter (17) an einer unmittelbar am Zylinderrohr angeordneten Führungseinrichtung in Gestalt einer Schwalbenschwanzführung oder einer Befestigungsschiene angeordnet ist.

2. Kolben-Zylinder-Aggregat nach Anspruch 1, dadurch gekennzeichnet, daß mehrere Dauermagnete (16) über den Kolbenumfang (15) verteilt im Bereich mehrerer Ellipsenscheitel angeordnet sind, wobei außen am Zylinder mehrere Schalter (17) zugeordnet sind.

3. Kolben-Zylinder-Aggregat nach Anspruch 1 oder 2; dadurch gekennzeichnet, daß der Dauermagnet (16) in die zugeordnete Vertiefung (21) eingebettet und insbesondere eingeklebt ist.

4. Kolben-Zylinder-Aggregat nach einem der Ansprüche 1 bis 3, dadurch gekennzeichnet, daß sich die Vertiefung (21) für den Dauermagneten im axialen Mittelbereich des Kolbens (6) befindet.

5. Kolben-Zylinder-Aggregat nach einem der Ansprüche 1 bis 4, dadurch gekennzeichnet, daß der Dauermagnet (16) ein Stabmagnet ist, dessen Magnetpole insbesondere in Verschieberichtung des Kolbens (6) ausgerichtet sind.

6. Kolben-Zylinder-Aggregat nach einem der Ansprüche 1 bis 5, dadurch gekennzeichnet, daß der Kolben und/oder zumindest der den Zylinderraum umfangsseitig begrenzende Abschnitt des Zylinders als Ziehprofilteil ausgebildet ist.

7. Kolben-Zylinder-Aggregat nach einem der Ansprüche 1 bis 6, dadurch gekennzeichnet, daß der Kolben (6) von mindestens einem am Kolben (6) mit diesem mitbewegbar befestigten, sich über einen Abschnitt der Kolbenlänge erstreckenden ringförmigen Kolbenführungsband (31) koaxial umgeben ist, derart, daß der Kolben-Außenumfang (15) der Führungsfläche (5) des Zylinderraumes (4) berührungslos gegenüberliegt und das zweckmäßigerweise den Dauermagneten (16) zur Führungsfläche (5) hin abdeckende Führungsband (31) mit seiner radial nach außen weisenden Bandführungsfläche (33) an der Führungsfläche (5) des Zylinderraumes (4) mit Gleitspiel anliegt.

8. Kolben-Zylinder-Aggregat nach einem der Ansprüche 1 bis 7, dadurch gekennzeichnet, daß die Querschnittsfläche des Zylinderraumes (4) größer ist als die jenige des Kolbens (6), wobei im Bereich des der Führungsfläche (5) zugewandten Außenumfanges (15) des Kolbens mindestens ein diesen (6) vollständig umgebender und hierbei in Radialrichtung mit einer Dichtungspartie (30) überstehender Dichtungsring (25,25' bzw. 26,26') angeordnet ist, der über seinen gesamten Umfang gleitfähig und dichtend an der Führungsfläche (5) des Zylinderraumes (4) anliegt.

9. Kolben-Zylinder-Aggregat nach Anspruch 8, dadurch gekennzeichnet, daß in die Kolben-Umfangsfläche (15) mindestens eine und vorzugsweise zwei in axialem Abstand zueinander angeordnete umlaufende, in sich geschlossene Halterungsvertiefungen (29,29') bzw. -nuten eingelassen sind, in denen jeweils ein Dichtring (25,25' bzw. 26,26') sitzt und zweckmäßigerweise austauschbar eingeknüpft ist, während das Führungsband (31) in einer in die der Führungsfläche (5) zugewandten Außenoberfläche (15) des Kolbens (6) eingelassenen, diesen koaxial umgebenden, zweckmäßigerweise im Bereich der Kolbenlängsmitte angeordneten Befestigungsvertiefung (34) gehaltert ist.

10. Kolben-Zylinder-Aggregat nach einem der Ansprüche 1 bis 9, dadurch gekennzeichnet, daß die am Außenumfang des Zylinders sich in dessen Längsrichtung, zweckmäßigerweise in achsparalleler Anordnung zu diesem und praktisch über die gesamte Hublänge erstreckende Befestigungsschiene oder -leiste am Zylinder durch Ziehen angeformt ist und insbes. außerhalb der die Hauptachse (44) des Kolbenquerschnittes enthaltenden Längsmittelebene liegt.

11. Kolben-Zylinder-Aggregat nach Anspruch 10, dadurch gekennzeichnet, daß die Befe'stigungsschiene oder -leiste (42) mit dem Zylinder (40) über einen dünnen Steg (47) verbunden ist, dessen Breite (b) kleiner als diejenige (C) des außenliegenden eigentlichen Halterungsteiles (48) der Befestigungsschiene oder -leiste (42) ist, das vorzugsweise die Gestalt einer Verdickung hat.

12. Kolben-Zylinder-Aggregat nach Anspruch 10 oder 11, dadurch gekennzeichnet, daß der Schalter (43) an der einen Längsseite (49) der Befestigungsschiene oder -leiste (42) angelegt ist und an ihr mit Hilfe eines mit ihm lösbar, z.B. durch Verschrauben verbundenen Gegenstückes (51) gehalten ist, das die Befestigungsschiene oder -leiste von der anderen Seite her mit einem vorzugsweise klauenartig gebogenen Ansatz (50) umgreift, der zweckmäßigerweise unter die Verdickung greift.

13. Kolben-Zylinder-Aggregat nach einem der Ansprüche 10 bis 12, dadurch gekennzeichnet, daß die Befestigungsschiene oder -leiste (42) so weit gegenüber der Hauptachse (44) der Ellipse des Querschnitts seitlich versetzt ist, daß in der entsprechenden Endstellung des Kolbens (41) der Schalter (43) dem stab- oder stiftförmigen Magnet (46) genau gegenüberliegt, wobei z.B. der Schalter (43) und der Dauermagnet (46) sich in der Längsmittelebene des Zylinders (40) befinden können, die auch die Hauptachse (44) des Ovals des Zylinder- und Kolbenquerschnittes enthält.

## Claims

1. Piston-cylinder assembly, inside the cylinder (1) of which is a cylinder chamber (4) extending in the axial direction, with a cross-section deviating from the circular form, in which is located a piston (6), secured against torsional movement, capable of movement in the axial direction and in this connection guided by the peripheral-side guide surface (5) of the cylinder chamber (4), which also has a cross-section and outer periphery (15) deviating from the circular form and matching the cross-section of the cylinder chamber (4), wherein the piston (6) has in at least one apex area of its outer periphery facing the guide surface (5) a recess (21) in which is securely mounted a permanent magnet (16), driven by the sliding motion of the piston (6) and extending only along one section of the piston periphery (15), with at least one switch (17) e.g. in the form of a reed switch, mounted in the area of its linear sliding path outside the cylinder (1) and capable of actuation without contact by means of the magnetic field of the permanent magnet (16) coming into its vicinity in the course of piston travel, characterized in that for the prevention of torsional movement both the cylinder chamber (4) and the piston (6) have an oval - in particular elliptical - cross-section, and that the cylinder at least in the area of the cylinder chamber (4) has a rectangular external contour when viewed in cross-section, with the two longitudinal axes of the rectangle being aligned on the one hand parallel to the main axis and on the other hand parallel to the secondary axis of the piston oval, that the recess (21) for the permanent magnet (16) is located in the area of one main apex of the oval or ellipse and lies opposite an area of the cylinder with reduced wall thickness relative to other areas of the wall, and that the switch (17) is mounted on a guide element in the form of a dovetail guide or a mounting rail attached directly to the cylinder barrel.

2. Piston-cylinder assembly according to claim 1, characterized in that several permanent magnets (16) are arranged distributed over the piston periphery (15) in the vicinity of several ellipse apexes, with several associated switches on the outside of the cylinder.

3. Piston-cylinder assembly according to claim 1 or 2, characterized in that the permanent magnet (16) is embedded and in particular glued in to the appropriate recess (21).

4. Piston-cylinder assembly according to any of claims 1 to 3, characterized in that the recess (21) for the permanent magnet is located in the axial centre area of the piston (6).

5. Piston-cylinder assembly according to any of claims 1 to 4, characterized in that the permanent magnet (16) is a bar magnet, the magnetic poles of which are in particular aligned in the direction of travel of the piston (6).

6. Piston-cylinder assembly according to any of claims 1 to 5, characterized in that the piston and/or at least that section of the cylinder bounding the cylinder chamber on the periphery side is formed as a drawn profile part.

7. Piston-cylinder assembly according to any of claims 1 to 6, characterized in that the piston (6) is surrounded coaxially by at least one annular piston guide band (31) extending over a section of the piston length, fastened to the piston and able to travel along with it, in such a way that the piston outer periphery (15) lies without contact opposite the guide surface (5) of the cylinder chamber (4) and that the guide band (31) which expediently covers the permanent magnet (16) towards the guide surface (5) fits with freedom to slide against the guide surface (5) of the cylinder chamber (4) with its radially outwards-facing band guide surface (33).

8. Piston-cylinder assembly according to any of claims 1 to 10, characterized in that the cross-sectional surface of the cylinder chamber (4) is greater than that of the piston (6), whereby one or more packing rings (25, 25' and 26, 26') completely surrounding the piston (6) and at the same time projecting radially with one packing section (30) are located in the area of the outer periphery (15) of the piston facing the guide surface (5), and fit against the guide surface (5) of the cylinder chamber (4) over its whole circumference with sliding and sealing properties.

9. Piston-cylinder assembly according to claim 8, characterized in that sunk into the peripheral surface (15) of the piston are at least one and preferably two circumferential, self-contained retaining recesses (29, 29') or grooves, spaced apart axially, in each of which is inserted a packing ring (25, 25' and 26, 26'), expediently tied in so as to be interchangeable, while the guide band (31) is held in a mounting recess (34) sunk into that outer surface (15) of the piston (6) facing the guide surface (5), surrounding the piston coaxially and expediently located in the vicinity of the piston's longitudinal centre.

10. Piston-cylinder assembly according to any of claims 1 to 9, characterized in that, at the outer periphery of the cylinder is provided a mounting rail or strip, extending in the cylinder's longitudinal direction, expediently parallel to its axis and practically over the entire length of stroke, formed on the cylinder by drawing, and in particular lying outside the longitudinal centre plane containing the main axis (44) of the piston cross-section.

11. Piston-cylinder assembly according to claim 10, characterized in that the mounting rail or strip (44) is connected to the cylinder (40) by a thin link (47), the width (b) of which is less than that (C) of the outer actual mounting section (48) of the mounting rail or strip (42), which preferably has the shape of a swelling.

12. Piston-cylinder assembly according to claim 10 or 11, characterized in that the switch (43) is located on one longitudinal side (49) of the mounting rail or strip (42) and is fastened to it with the aid of a disconnectable counterpart (51), e.g. connected by screwing, which engages the mounting rail or strip from the other side with a preferably claw-like curved lug (50), which expediently engages below the swelling.

13. Piston-cylinder assembly according to any of claims 10 to 12, characterized in that the mounting rail or strip (42) is offset sideways relative to the main axis (44) of the ellipse of the cross-section to such an extent that in the corresponding end position of the piston (41), the switch (43) is exactly opposite the bar- or pin-shaped magnet (46), whereby e.g. the switch (43) and the permanent magnet (46) can be located in the longitudinal centre plane of the cylinder (40), which also contains the main axis (44) of the oval of the cylinder and piston cross-section.

## Revendications

1. Ensemble cylindre-piston dont le cylindre (1) présente à l'intérieur une chambre de cylindre (4) s'étendant dans la direction axiale avec une section transversale s'écartant de la forme circulaire, dans laquelle se trouve un piston (6) déplaçable dans la direction axiale et guidé, sans possibilité de rotation, par la surface de guidage périphérique (5) de la chambre de cylindre (4), lequel piston présente également une section transversale ou pourtour externe (15) adapté à la section transversale de la chambre de cylindre (4) et s'écartant de la forme circulaire, le piston (6) présentant, au moins dans la région d'un sommet de son pourtour externe tourné vers la surface de guidage (5), un évidement (21) dans lequel est fixé un aimant permanent (16) entraîné dans le déplacement de coulissement du piston (6) et s'étendant uniquement le long d'une partie du pourtour (15) du piston, au moins un commutateur (17) configuré par exemple comme commutateur à lamelle, apte à être actionné sans contact par le champ magnétique de l'aimant permanent (16) qui se rend dans son voisinage lors du déplacement du piston, étant disposé sur un dispositif de guidage de manière à pouvoir coulisser, caractérisé en ce que, pour empêcher leur rotation, tant la chambre de cylindre (4) que le piston (6) présentent une section transversale ovale, en particulier elliptique, et en ce qu'au moins dans la région de la chambre de cylindre (4), le cylindre présente, vu en coupe transversale, un contour externe de forme rectangulaire, les deux axes longitudinaux du rectangle étant orientés respectivement parallèlement à l'axe principal et à l'axe secondaire de l'ovale du piston, en ce que l'évidement (21) pour l'aimant permanent (16) est disposé dans la région d'un sommet principal de l'ovale ou de l'ellipse et est situé face à une région du cylindre dont l'épaisseur de paroi est réduite par rapport à celle des autres régions de la paroi, et en ce que le commutateur (17) est disposé sur un dispositif de guidage placé directement sur le tube du cylindre et présentant la forme d'un guide en queue d'aronde ou d'un rail de fixation.

2. Ensemble cylindre-piston selon la revendication 1, caractérisé en ce que plusieurs aimants permanents (16) sont distribués à la périphérie (15) du piston dans la région de plusieurs sommets d'ellipse, plusieurs commutateurs (17) étant associés à l'extérieur sur le cylindre.

3. Ensemble cylindre-piston selon les revendications 1 ou 2, caractérisé en ce que l'aimant permanent (16) est logé dans l'évidement (21) associé, et est en particulier collé à celui-ci.

4. Ensemble cylindre-piston selon l'une des revendications 1 à 3, caractérisé en ce que l'évidement (21) pour l'aimant permanent est situé dans la région axiale centrale du piston (6).

5. Ensemble cylindre-piston selon l'une des revendications 1 à 4, caractérisé en ce que l'aimant permanent (16) est un aimant en barreau dont les pôles magnétiques sont orientés en particulier dans la direction de coulissement du piston (6).

6. Ensemble cylindre-piston selon l'une des revendications 1 à 5, caractérisé en ce que le piston et/ou au moins la partie du cylindre délimitant la chambre de cylindre du côté de la périphérie sont configurés comme éléments profilés emboutis.

7. Ensemble cylindre-piston selon l'une des revendications 1 à 6, caractérisé en ce que le piston (6) est entouré coaxialement par au moins une bande de guidage de piston (31) de forme annulaire, s'étendant sur une partie de la longueur du piston et fixée sur le piston (6) et pouvant se déplacer conjointement avec celui-ci, de telle sorte que le pourtour externe (15) du piston fait face à la surface de guidage (5) de la chambre de cylindre (4) sans la toucher, et que la bande de guidage (31) recouvrant avantageusement l'aimant permanent (16) en direction de la surface de guidage (5) s'applique, avec un jeu de coulissement, contre la surface de guidage (5) de la chambre de cylindre (4), par sa surface de guidage de bande (33) dirigée radialement vers l'extérieur.

8. Ensemble cylindre-piston selon l'une des revendications 1 à 7, caractérisé en ce que la superficie de la section transversale de la chambre de cylindre (4) est supérieure à celle du piston (6), au moins une bague d'étanchéité (25, 25' ou 26, 26') entourant totalement le piston (6) et faisant saillie radialement par une partie d'étanchéité (30), étant disposée dans la zone du pourtour externe (15) du piston tournée vers la surface de guidage (5) et s'appliquant sur toute sa périphérie, de manière à pouvoir coulisser contre la surface de guidage (5) de la chambre de cylindre (4) tout en assurant l'étanchéité.

9. Ensemble cylindre-piston selon la revendication 8, caractérisé en ce qu'au moins un et de préférence deux évidements de maintien (29, 29') ou rainures de maintien, formant une boucle fermée, espacés l'un de l'autre axialement, sont ménagés dans la surface périphérique (15) du piston, une bague d'étanchéité (25, 25' ou 26, 26') étant logée et avantageusement montée de manière amovible dans ces évidements, tandis que la bande de guidage (31) est maintenue dans un évidement de fixation (34) ménagé dans la face externe (15) du piston (6) tournée vers la surface de guidage (5), entourant coaxialement le piston, et avantageusement disposé dans la région du milieu de la longueur du piston.

10. Ensemble cylindre-piston selon l'une des revendications 1 à 9, caractérisé en ce que le rail de fixation ou la baguette de fixation, qui s'étendent à la périphérie externe du cylindre, dans la direction longitudinale de celui-ci, avantageusement en agencement à axes parallèles par rapport à celui-ci et s'étendant sur pratiquement toute la longueur de la course, sont formés sur le cylindre par estampage et sont en particulier disposés à l'extérieur du plan longitudinal médian contenant l'axe principal (44) de la section transversale du piston.

11. Ensemble cylindre-piston selon la revendication 10, caractérisé en ce que le rail de fixation ou la baguette de fixation (42) sont reliés au cylindre (40) par une mince entretoise (47) dont la largeur (b) est inférieure à celle (C) de l'élément de maintien (48) proprement dit, situé à l'extérieur du rail de fixation ou de la baguette de fixation (42), et qui a de préférence la forme d'un épaississement.

12. Ensemble cylindre-piston selon la revendication 10 ou 11, caractérisé en ce que le commutateur (43) est appliqué contre un côté longitudinal (49) du rail de fixation ou de la baguette de fixation (42), et est maintenu contre celui-ci à l'aide d'une pièce (51) reliée au commutateur de manière libérable, par exemple par vissage, laquelle pièce chevauche par l'autre côté le rail de fixation ou la baguette de fixation par un appendice (50) de préférence courbé en forme de griffe, et qui s'engage avantageusement sous l'épaississement.

13. Ensemble cylindre-piston selon l'une des revendications 10 à 12, caractérisé en ce que le rail de fixation ou la baguette de fixation (42) sont décalés latéralement par rapport à l'axe principal (44) de l'ellipse de la section transversale, dans une mesure telle que dans la position finale correspondante du piston (41), le commutateur (43) se trouve exactement en face de l'aimant en forme de barreau ou de tige (46), le commutateur (43) et l'aimant permanent (46) pouvant se trouver par exemple dans le plan médian longitudinal du cylindre (40) qui contient aussi l'axe principal (44) de l'ovale de la section transversale du cylindre et du piston.
